# EUROPÄISCHE PATENTSCHRIFT

(11) **EP 2 576 111 B1**
(45) Veröffentlichungstag und Bekanntmachung des Hinweises auf die Patenterteilung: **08.03.2017**
(21) Anmeldenummer: 11770674.7
(22) Anmeldetag: 30.05.2011
(51) Int. Cl.: B23B 51/02

(54) **BOHRWERKZEUG**
DRILLING TOOL
OUTIL DE FORAGE

(30) Priorität: 31.05.2010 DE 102010017163
(43) Veröffentlichungstag der Anmeldung: 10.04.2013
(73) Patentinhaber: Gühring KG, 72458 Albstadt (DE)
(72) Erfinder: BOZKURT, Lutfi, 72474 Winterlingen (DE)
(74) Vertreter: Winter, Brandl, Fürniss, Hübner, Röss, Kaiser, Polte - Partnerschaft mbB
(86) Internationale Anmeldenummer: PCT/DE2011/001172
(87) Internationale Veröffentlichungsnummer: WO 2012/006990

(56) Entgegenhaltungen:
- WO-A1-02/04158
- DE-A1-102006 049 096
- JP-A- 1 005 708
- JP-A- 63 318 208
- US-A- 2 778 252

## Beschreibung

Die Erfindung betrifft ein Bohrwerkzeug gemäß dem Oberbegriff des Anspruchs 1. Ein derartiges Bohrwerkzeug ist aus der JP 1 005708 A bekannt.

Bohrwerkzeuge, wie sie beispielsweise aus der DE 102006049096 A1, JP 63318208 A, US 2778252 A, WO 02/04158 A1, DE 202005000994 U1, DE 3319718 A1 oder DE 102008023856 A1 bekannt sind, haben einen Spannschaft zum Einspannen des Bohrwerkzeugs in einem Spannfutter und einem sich an den Spannschaft anschließenden Schneidteil, der eine oder mehrere gerade- oder spiralgenutete, d.h. geradlinig oder wendelförmig um die Werkzeugachse verlaufende, Spannuten aufweist. Die mit Hilfe einer entsprechenden Profil- bzw. Formschleifscheibe in den Schneidteil eingeschliffenen Spannuten weisen üblicherweise eine konkave Spannutfläche auf, deren Querschnitt gekrümmt oder abgewinkelt sein kann. Abgesehen von Sonderanfertigungen für spezielle Anwendungen zeichnen sich gattungsgemäße Bohrwerkzeuge dadurch aus, dass der Spannutquerschnitt von der an die Hauptschneidkante angrenzenden Spanbildungszone bis zum Auslauf auf der Seite des Spannschafts gleich bleibt. Der Spannutquerschnitt ist für einen guten Spanablauf in Richtung Spannschaft entscheidend. Ein allzu großer Spannnutquerschnitt geht aber zu Lasten der Werkzeugstabilität. Die Spanbildungszone beginnt an der Hauptschneidkante und ist daher durch die Schneidkeilgeometrie der Hauptschneidkante definiert. Bei einem positiven Spanwinkel bildet der Schneidkeil eine spitze Hauptschneidkante, die in Abhängigkeit von dem zu bearbeitenden Werkstoff zum Ausbrechen neigt. Um die Stabilität der Hauptschneidkante zu erhöhen, wird daher oftmals ein kleiner oder sogar negativer Spanwinkel gewählt. Andererseits lässt ein positiver Spanwinkel die Späne eher leichter über den Schneidkeil gleiten. Das in der JP 1005708 A offenbarte Bohrwerkzeug hat in der an die Hauptschneidkante angrenzenden Spannbildungszone einen die Querschneide korrigierenden Einschliff, der den Spannutquerschnitt vergrößert. Ausgehend von dem aus der DE 102008023856 A1 bekannten Bohrwerkzeug liegt dem erfindungsgemäßen Bohrwerkzeug die Aufgabe zugrunde, ein Bohrwerkzeug bereitzustellen, das sich durch eine verbesserte Spanabfuhr und eine hohe Standzeit auszeichnet.

Diese Aufgabe wird durch ein Bohrwerkzeug mit den Merkmalen des Anspruchs 1 gelöst. Vorteilhafte Weiterbildungen sind Gegenstand abhängiger Ansprüche.

Ein erfindungsgemäßes Bohrwerkzeuge hat einen zweischneidigen Spitzenanschliff mit punktsymmetrischer Schneidenanordnung und ausgespitzter Querschneide, einen Spannschaft und einen sich an den Spannschaft anschließenden Schneidteil, derzwei, vorzugsweise wendelförmig um die Werkzeugachse verlaufende Spannuten mit jeweils einer im Querschnitt konkaven, insbesondere konkav gekrümmten, Spannutfläche aufweist. In der an die Hauptschneidkante des Bohrwerkzeugs angrenzenden Spanbildungszone ist jede Spannut im Bereich der Spannutbrust und/oder des Stegrückens zur Vergrößerung des Spannutquerschnitts eingeschliffen.

Das erfindungsgemäße Bohrwerkzeug ist zweischneidig mit zwei, vorzugsweise wendelförmig um die Werkzeugachse verlaufenden Spannnuten ausgeführt sein. Jede Spannut ist im Bereich der Spanbildungszone, d.h. im Bereich der für die Spanbildung maßgeblichen Zone, die an die Hauptschneidkante anschließt, eingeschliffen. Der Einschliff ist daher unabhängig von der zusätzlich vorhandenen Kern- oder Querschneidenausspitzung, wie sie bei Bohrwerkzeugen aus der DIN 1412 an sich bekannt ist. Die zusätzlich vorhandene Kern- oder Querschneidenausspitzung liegt außerhalb der Spanbildungszone, während der erfindungsgemäße Einschliff zumindest teilweise in der Spanbildungszone liegt, d.h. in dem für die Spanbildung maßgeblichen Bereich der Spannut. Durch den Einschliff, der sich mit Hilfe einer geeigneten Formschleifscheibe, die in Spannut eingetaucht wird, relativ einfach bewerkstelligen lässt, wird zunächst einmal der Querschnitt der Spannut im Bereich der Spanbildungszone vergrößert. Durch den Einschliff, dessen Querschnitt über das Profil der Formschleifscheibe und deren Vorschub- oder Zustellbewegung relativ zum Bohrwerkzeug definiert wird, wird im Bereich der Spanbildungszone Material abgetragen. Der Querschnitt der Spannut wird im Bereich des Einschliffs daher vergrößert. Dem an der Hauptschneidkante gebildeten Span steht somit im Bereich der Spanbildungszone ein im Querschnitt vergrößerter Spanraum zur Verfügung, in dem der Span in Richtung Spannschaft ablaufen kann. Daher wird einem bei herkömmlichen Bohrwerkzeugen häufig zu beobachtenden Spanstau entgegengewirkt. Im Ergebnis wird die Spanbildung an der Hauptschneidkante verbessert. Des Weiteren ergibt sich durch den Einschliff ein die Spannutbrust und/oder den Stegrücken erfassender Bereich, der im Querschnitt idealerweise stärker gekrümmt ist als der Querschnitt der Spannut außerhalb des Einschliffs. Im Bereich des Einschliffs erfährt der in der Span daher eine stärkere Krümmung als im Bereich der Spannut außerhalb des Einschliffs. Die stärkere Spankrümmung trägt zu einem relativ frühzeitigen Spanbruch bei, so dass am Ausgang des Einschliffs bzw. der Spanbildungszone kurze Spanbruchstücke vorliegen, die dann problemlos über die an den Einschliff anschließenden Bereich der Spannut ablaufen können.

Der Ablauf der Späne bzw. der Spanbruchstücke in Richtung Spannschaft kann durch die Einspeisung von Kühl-/Schmiermittel in das Bohrloch weiter verbessert werden. Hierzu kann das Bohrwerkzeug in an sich bekannter Weise mit einem innenliegenden Kühl-/Schmiermittelzufuhrsystem ausgestattet sein.

Da der Einschliff auf den Bereich der Spanbildungszone beschränkt ist, d.h. den Kern des Bohrwerkzeugs zumindest im Wesentlichen nicht erfasst, wird der Querschnitt des Bohrwerkzeugs insgesamt betrachtet nicht übermäßig stark geschwächt. Im Besonderen ist der Einschliff so ausgeführt, dass er sich nur über eine relativ kurze axiale Länge des Schneidteils erstreckt, die vorteilhaft in Abhängigkeit vom Werkzeugdurchmesser definiert ist. Die axiale Länge, über die sich der Einschliff erstreckt, liegt im Bereich des 0,5 bis 1,5-fachen des Werkzeugdurchmessers. Der Kernquerschnitt des Bohrwerkzeugs lässt sich daher trotz des Einschliffs der Spannut zumindest im Wesentlichen erhalten, wodurch eine hohe Werkzeugstandzeit gewährleistet werden kann. Durch die Beschränkung der axialen Erstreckungslänge des Einschliffs auf die Spanbildungszone lässt sich daher auch bei einem bereits fertig geschliffenen Bohrwerkzeug der Spannutenquerschnitt nachträglich den jeweiligen Bedürfnissen Rechnung tragend optimieren, ohne dass eine kostenintensive Formgebung des Querschnitts des Bohrwerkzeugs erforderlich ist.

Im Besonderen kann durch den Einschliff nicht nur der Spannutquerschnitt vergrößert werden, sondern auch die Lage und/oder der Verlauf der Hauptschneidkante vorteilhaft geändert werden. Beispielsweise kann bei einem herkömmlichen Bohrwerkzeug, bei dem die Hauptschneidkante normalerweise in einer Ebene liegt, die in einem vorgegebenen Abstand vor einer Axialebene des Bohrwerkzeugs liegt, der Einschliff so ausgeführt werden, dass unter Erhaltung der Schneidenecke eine korrigierte Hauptschneidkante gebildet wird, die zumindest im Wesentlichen in einer Axialebene des Bohrwerkzeugs liegt. Ferner kann der Einschliff der Spannut so ausgeführt sein, dass in der Spanbildungszone Spanleitstufen ausbildet sind, die die Späne brechen und in Richtung der sich zum Schaftabschnitt hin fortsetzenden Spannut leiten.

Des Weiteren eröffnet der erfindungsgemäße Einschliff im Bereich der an die Hauptschneidkante angrenzenden Spannbildungszone die Möglichkeit, den die Hauptschneidkante mitbildenden Spanwinkel bzw. die die Hauptschneidkante definierende Schneidkeilgeometrie von der Schneidenecke ausgehend zur Werkzeugachse hin ohne einen der an sich bekannten Sonderanschliffe zu korrigieren. Beispielsweise kann durch den Einschliff der Spannut in der Spanbildungszone die Schneidkeilgeometrie zumindest über einen Längenabschnitt der Hauptschneidkante in der Weise korrigiert werden, dass der Keilwinkel des die Hauptschneidkante definierenden Schneidkeils entlang der Hauptschneidkante in Richtung Werkzeugachse zunimmt bzw. der Spanwinkel zwischen Spannutbrust (Spanfläche) und Werkzeugachse in Richtung Werkzeugachse abnimmt.

Bei dem erfindungsgemäßen Bohrwerkzeug liegt der Einschliff vorzugsweise radial innerhalb der Schneidenecke zwischen Haupt- und Nebenschneidkante. Durch diese Gestaltung wird sichergestellt, dass der Einschliff die Schneidenecke nicht erfasst, sondern sich in radialer Richtung von einer Position innerhalb der Schneidenecke in Richtung Werkzeugachse erstreckt. Da die Schneidenecke erhalten bleibt, kann der Einschliff auch nachträglich an einem herkömmlichen Werkzeug vorgenommen werden.

Vorzugsweise läuft der Einschliff zudem radial innerhalb der Nebenschneidkante allmählich aus. Durch diese Gestaltung bleiben die Nebenschneide und damit eine entlang der Nebenschneide gebildete Führungsfase erhalten. Der Einschliff erstreckt sich daher in radialer Richtung vollständig innerhalb der Nebenschneide.

Das erfindungsgemäße Bohrwerkzeug kann einstückig aus einem geeigneten Werkstoff, z. B. Vollhartmetall, ausgebildet sein. In einer bevorzugten Weiterbildung ist das erfindungsgemäße Bohrwerkzeug jedoch aus einem mit einem oder mehreren plättchenförmigen Schneideinsätzen bestückten Grundkörper gebildet, und zwar in der Weise, dass die Haupt- und Nebenschneidkanten jeweils (wenigstens teilweise) an einem plättchenförmigen Schneideinsatz ausgebildet sind, der in einer in die Spannut eingearbeiteten stirn- und umfangsseitig offenen Aufnahmetasche angeordnet ist. Der Schneideinsatz bildet daher die Haupt- und Nebenschneidkanten zumindest im Bereich der Schneidenecke mit aus.

Mittels einer entsprechenden Formschleifscheibe lässt sich, beispielsweise dadurch dass die Formschleifscheibe durch eine geradlinig erfolgende Vorschub- oder Zustellbewegung relativ zum Bohrwerkzeug geführt wird, der Einschliff so ausführen, dass in einer Spannut mit einer im Querschnitt konkav gekrümmten Spannutfläche eine Planfläche gebildet wird. Die Planfläche lässt sich zur Ausbildung der Aufnahmetasche für den plättchenförmigen Schneideinsatz relativ leicht bearbeiten. Der plättchenförmige Schneideinsatz kann aus einem hochverschleißfesten Werkstoff, z.B. polykristallem Diamant (PKD), Cubic Boron Nitride (CBN), CVD-Diamant, Cermet oder dergleichen ausgebildet sein. Der Einsatz eines derartigen Schneideinsatzes bei Bohrwerkzeugen ist an sich bekannt. Durch eine entsprechende Gestaltung der Aufnahmetasche lässt sich aber besonders einfach erreichen, dass der der Schneideinsatz mit der Planfläche des Einschliffs im Wesentlichen bündig oder mit einem definierten (geringen) Überstand gegenüber der Planfläche angeordnet ist.

Unabhängig davon, ob das Bohrwerkzeug einstückig ausgebildet oder mit einem oder mehreren plättchenförmigen Schneideinsätzen bestückt ist, liegt die Planfläche, sofern der Einschliff eine Planfläche ausbildet, in einem definierten Winkel zur Werkzeugachse, der vorzugsweise kleiner-gleich dem Spanwinkel bzw. Drallwinkel der Spannut ist. Die Planfläche führt zu einer geradlinig verlaufenden Hauptschneidkante. Ein weiterer Vorteil ist darin zu sehen, dass es durch die Planfläche auf besonders einfache Weise gelingt, die Hauptschneidkante beispielsweise radial auszurichten. Durch den Winkelunterschied zwischen dem Winkel der Planfläche und dem Spanwinkel bzw. Drallwinkel der Spannut relativ zur Werkzeugachse erfährt der in der Spannut ablaufende Span beim Übergang von der Planfläche in die Spannutfläche zudem einen Drall, der für einen Spanbruch förderlich ist.

Die Aufnahmetasche ist vorzugsweise in der Weise an die Geometrie des plättchenförmigen Schneideinsatzes ist, dass sie eine mit der Planfläche des Einschliffs im Wesentlichen bündige oder eine gegenüber der Planfläche des Einschliffs definiert überstehende Anordnung des Schneideinsatzes in der Aufnahmetasche gestattet.

Das erfindungsgemäße Bohrwerkzeug kann mit geradlinig, beispielsweise achsparallel, oder wendelförmig um Werkzeugachse verlaufenden Spannnuten ausgeführt sein. In einer bevorzugten Ausführungsform hat das erfindungsgemäße Bohrwerkzeug einen zweischneidigen Spitzenanschliff mit punktsymmetrischer Schneidenanordnung und ausgespitzter Querschneide. Ein Spitzenanschliff mit ausgespitzter Querschneide ist an sich bekannt. Das erfindungsgemäße Bohrwerkzeug kombiniert jedoch die sich aus der Querschneidenausspitzung ergebenden, bekannten Vorteile mit den oben erläuterten Vorteilen des Einschliffs der Spanbildungszone.

Zur der zwischen der Ausspitzung und der angrenzenden Hauptfreifläche des in Drehrichtung voreilenden Stegs gebildeten Kante kann diese abgezogen bzw. abgeschliffen sein.

Anhand der Zeichnungen werden im Folgenden eine bevorzugte Ausführungsform und verschiedene Abwandlungen des erfindungsgemäßen Bohrwerkzeugs dargestellt.
Fig. 1 zeigt eine Seitenansicht des erfindungsgemäßen Bohrwerkzeugs in der bevorzugten Ausführungsform.
Fig. 2 zeigt eine Schneidteilspitzenabschnitt des erfindungsgemäßen Bohrwerkzeugs aus Fig. 1
Fig. 3 zeigt den Schneidteilspitzenabschnitt gemäß Fig. 2 mit einer durch Schraffur kenntlich gemachten Planfläche.
Fig. 4 zeigt schematisch das Konzept des erfindungsgemäßen Einschliffs.
Fig. 5 bis 9 zeigen Schneidteilspitzenabschnitte abgewandelter Bohrwerkzeuge.

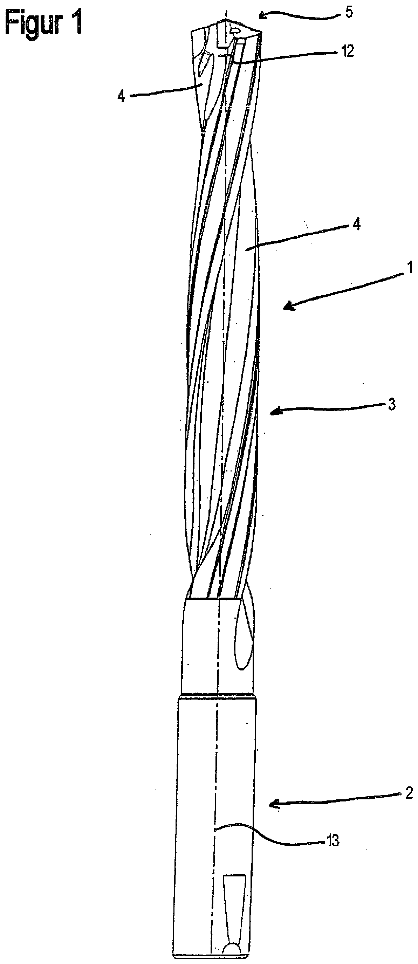

Bei der in Fig. 1 gezeigten Ausführungsform ist das Bohrwerkzeug 1 als ein zweischneidiger Spiralbohrer ausgeführt. Das in Fig. 1 gezeigte Bohrwerkzeug lässt sich funktional in einen Spannschaft 2 zum Einspannen des Bohrwerkzeugs 1 in einer (nicht gezeigten) Werkzeugaufnahmevorrichtung, z.B. einem Spannfutter, und einen sich an den Spannschaft 2 anschließenden Schneidteil 3 untergliedern. Der Schneidteil 3 hat zwei wendelförmig um die Werkzeugachse verlaufende Spannuten 4, die sich jeweils durch eine im Querschnitt konkav gekrümmte Spannutfläche auszeichnen, sowie eine mit einem Spitzenanschliff versehene Schneidteilspitze 5.

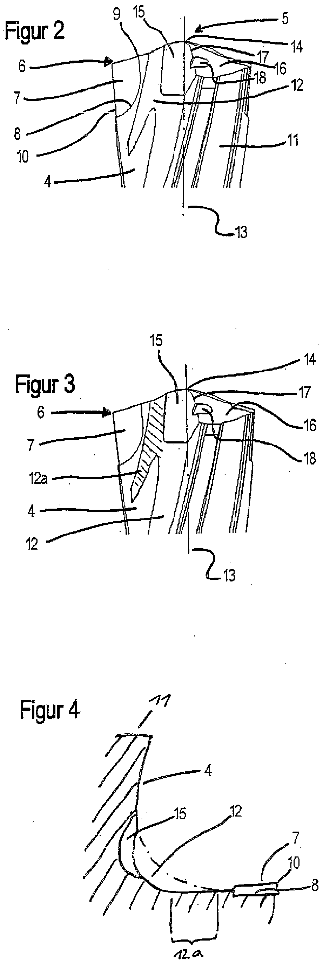

Bei dem in Fig. 1 gezeigten Bohrwerkzeug 1 ist der Schneidteil 3 aus einem Grundkörper gebildet, der im Bereich der Schneidenecken 6 (vgl. Fig. 2) jeweils mit einem plättchenförmigen Schneideinsatz 7 bestückt ist. Die Schneideinsätze 7 sind jeweils in einer im Bereich der Schneidecke 6 der entsprechenden Spannut eingearbeiteten stirn- und umfangsseitig offenen Aufnahmetasche 8 angeordnet. Die Schneideinsätze 7 bilden daher jeweils die Haupt- und Nebenschneidkanten 9, 10 im Bereich der Schneidenecke 6 mit aus. Die plättchenförmigen Schneideinsätze 7 sind aus einem hochverschleißfesten Werkstoff, z.B. polykristallem Diamant (PKD), Cubic Boron Nitride (CBN), CVD-Diamant, Cermet oder dergleichen ausgebildet.

Bei dem in Fig. 1 gezeigten Bohrwerkzeug 1 sind die beiden Spannuten 4 erfindungsgemäß jeweils in der an die Hauptschneidkante 9 angrenzenden Spanbildungszone eingeschliffen und zwar im Besonderen in der Weise, dass der Einschliff die Spannutbrust, d.h. die Spanfläche, und den Stegrücken des in Drehrichtung vorauseilenden Stegs 11 erfasst. Durch den Einschliff 12, der sich mit Hilfe einer geeigneten Formschleifscheibe, die von der Seite her in die jeweilige Spannut 4 eingetaucht und dann in Richtung Schneidteilspitze 5 geführt wird, relativ einfach bewerkstelligen lässt, wird der Querschnitt der Spannut 4 im Bereich der Spanbildungszone vergrößert. Dem an der Hauptschneidkante 9 gebildeten Span steht daher im Bereich der Spanbildungszone ein im Querschnitt vergrößerter Spanraum zur Verfügung, in dem die Späne in Richtung Spannschaft 2 ablaufen können. Des Weiteren ergibt sich durch den Einschliff 12 ein die Spannutbrust und den Stegrücken erfassender Oberflächenbereich, der im Querschnitt stärker gekrümmt ist als der Querschnitt der Spannut 4 außerhalb des Einschliffs 12.

Fig. 4 zeigt schematisch das Konzept des Einschliffs 12 in der Spannut 4. Die strichpunktierte Linie gibt den Querschnitt der Spannut 4 ohne bzw. in einem nicht eingeschliffenen Abschnitt an. Zu erkennen ist, dass sich durch den Einschliff 12 der Querschnitt der Spannut 4 vergrößert. Zudem wird über den im Querschnitt stärker gekrümmten Einschliff 12 eine Spanleitstufe 16 ausgebildet. Im Bereich des Einschliffs 12 erfährt der Span daher eine stärkere Krümmung als im Bereich der Spannut 4 außerhalb des Einschliffs 12. Die stärkere Spankrümmung trägt zu einem relativ frühzeitigen Spanbruch bei, so dass am Ausgang des Einschliffs 12 bzw. der Spanbildungszone kurze Spanbruchstücke vorliegen, die dann problemlos über in den an den Einschliff 12 anschließenden Bereich der Spannut 4 ablaufen können.

Wie es aus Fig. 2 ersichtlich ist, sind die Spannuten 4 jeweils im Besonderen in der Weise eingeschliffen, dass sich der Einschliff 12 nur über eine relativ kurze axiale Länge des Schneidteils 3 erstrecken. Die axiale Länge, über die sich der Einschliff 12 erstreckt, liegt im Bereich des 0,5 bis 1,5-fachen des Werkzeugdurchmessers. Der Kernquerschnitt des Bohrwerkzeugs lässt sich daher trotz der Einschliffe 12 der Spannuten 4 über eine wesentliche axiale Länge erhalten, wodurch eine hohe Werkzeugstandzeit gewährleistet werden kann.

Bei dem in Fig. 1 gezeigten Bohrwerkzeug 1 bilden der Einschliff 12 in der jeweiligen Spannut 4, die grundsätzlich eine im Querschnitt konkave gekrümmte Spannutfläche hat, jeweils eine Planfläche 12a. Eine der Planflächen 12a ist in Fig. 3 durch eine Schraffur angedeutet. Die Planflächen 12a sind jeweils in einem definierten Winkel zur Werkzeugachse 13 ausgerichtet, der vorzugsweise kleiner-gleich dem Spanwinkel bzw. Drallwinkel der Spannut 4 ist.

Obwohl bei dem in Fig. 1 gezeigten Bohrwerkzeug 1 die Planflächen 12 sich nicht bis zu dem jeweiligen plättchenförmigen Schneideinsatz 7 erstrecken, gestatten die Planflächen 12a dennoch eine Angleichung bzw. Annäherung des Niveaus der Oberfläche der Spannutbrust zumindest im Bereich der Spanbildungszone an das Niveau der Oberfläche der am Schneideinsatz 7 gebildeten Spanfläche. Den an den Hauptschneidkanten 9 gebildeten Spänen steht daher ein durch den Einschliff 12 vergrößerter Spannutquerschnitt zur Verfügung.

Durch den stirnseitig über die Schneidteilspitze 5 hinaus ausgeführten Einschliff 12 sind die Lage und der Verlauf der Hauptschneidkante 9 in der Weise korrigiert, dass die Hauptschneidkanten 9, die bei dem in Fig. 1 gezeigten Bohrwerkzeug von den Schneideinsätzen 7 und dem Werkzeuggrundkörper gebildet werden, jeweils im Wesentlichen in einer Axialebene des Bohrwerkzeugs 1 liegen.

Bei dem erfindungsgemäßen Bohrwerkzeug 1 liegen die Einschliffe 12 jeweils radial innerhalb der Schneidenecke 6 zwischen Haupt- und Nebenschneidkante 9, 10. Des Weiteren laufen die Einschliffe 12 noch vor der jeweiligen Nebenschneidkante 8, die bei dem in Fig. 1 gezeigten Bohrwerkzeug 1 von den Schneideinsätzen 7 und dem Werkzeuggrundkörper gebildet werden, allmählich aus.

Das in Fig. 1 gezeigte Bohrwerkzeug 1 hat, wie aus Fig. 2 ersichtlich ist, einen zweischneidigen Spitzenanschliff mit punktsymmetrischer Schneidenanordnung und ausgespitzter Querschneide 14. Ein Spitzenanschliff mit ausgespitzter Querschneide ist an sich bekannt. Das erfindungsgemäße Bohrwerkzeug 1 kombiniert jedoch die sich aus der Querschneidenausspitzung 15 ergebenden, bekannten Vorteile mit den oben erläuterten Vorteilen des Einschliffs 12 der Spanbildungszone. Bei den erfindungsgemäßen Einschliffen 12 handelt es sich daher um von der an sich bekannten Querschneidenausspitzung 15 unabhängige, zusätzliche konstruktive Maßnahmen, die den Spanablauf im Bereich der Spanbildungszone positiv beeinflussen. Zur Vergrößerung der Werkzeugstandzeit bzw. um Ausbrüche der zwischen den Ausspitzungen 15 und der angrenzenden Hauptfreifläche 16 des in Drehrichtung jeweils voreilenden Stegs 11 gebildeten Kanten 17 zu verhindern sind diese Kanten 17 vorzugweise abgezogen bzw. abgeschliffen.

Zur Verbessserung des Ablaufs der Späne bzw. der Spanbruchstücke weist das in Fig. 1 gezeigte Bohrwerkzeug 1 in an sich bekannter Weise zusätzlich ein innenliegendes Kühl-/Schmiermittelzufuhrsystem mit stirnseitig sich öffnenden Austrittsöffnungen 18 auf.

Die Fig. 4 bis 9 zeigen in zum Teil perspektivischer Darstellung abgewandelte Schneidteilspitzenabschnitte eines mit Schneideinsätzen 7 bestückten Bohrwerkzeugs.

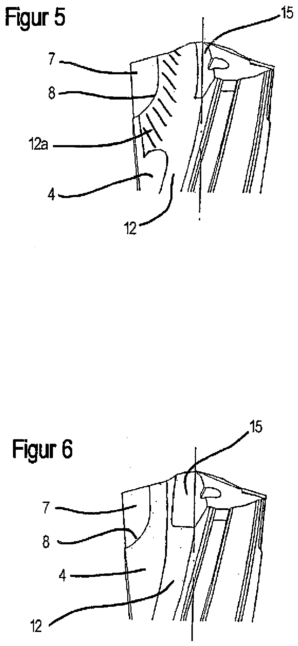

Während bei dem in Fig. 1 bis 3 gezeigten Bohrwerkzeug 1 der Einschliff 12 jeweils so ausgeführt ist, dass er die Aufnahmetasche des Schneideinsatzes 7 nicht erfasst, kann der Einschliff 12 in radialer Richtung gesehen auch bis in den Bereich der Aufnahmetasche 8 für den Schneideinsatz 7 ausgedehnt sein. Fig. 5 zeigt ein Beispiel für eine derart abgewandelte Schneidteilspitze 5. Die Aufnahmetasche 8 ist in diesem Fall im Besonderen so gestaltet, dass der Schneideinsatz 7 in Drehrichtung des Bohrwerkzeugs 1 betrachtet entweder bündig mit der durch den Einschliff 12 gebildeten Planfläche 12a angeordnet ist oder einen definierten, geringen Überstand gegenüber der durch Einschliff gebildeten Planfläche 12a hat.

Bei der in Fig. 6 gezeigten Abwandlung konzentriert sich der Einschliff 12 mehr auf den Stegrücken als auf die Spannutbrust.

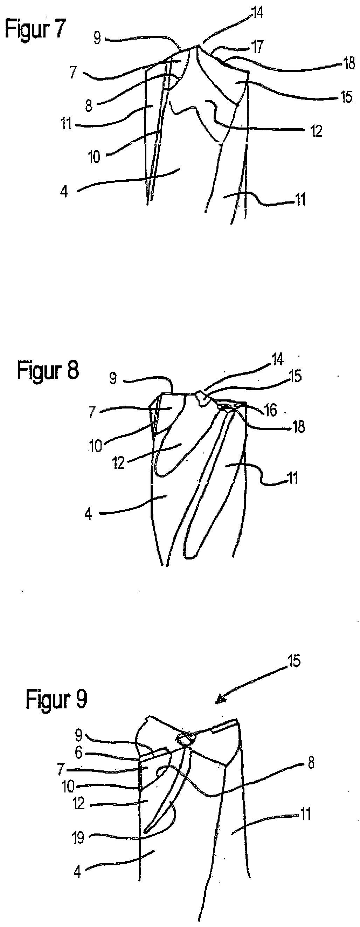

Fig. 7 zeigt eine Abwandlung, bei der sich der Einschliff 12 großflächig über die Spannutbrust und den Stegrücken in der Spanbildungszone erstreckt. Die Querschneidenausspitzung 15 erstreckt sich bei dieser Abwandlung von der Schneidteilspitze bis zum Außenumfang des Bohrwerkzeugs 1. In der perspektivischen Darstellung nicht zu erkennen ist die Hauptfreifläche, die in Drehrichtung betrachtet vor der Fläche der Ausspitzung 15 liegt. Die zwischen der Ausspitzungsfläche und der nicht mehr zu erkennenden Hauptfreifläche gebildete Kante 17 ist im Bereich der Austrittsöffnung 18 des innenliegenden Kühl-/Schmiermittelzufuhrsystems und der Schneidteilspitze 14 abgezogen.

Fig. 8 zeigt eine Abwandlung bei der sich der Einschliff 12 sich auf auf ÜBergangsbereich zwischen Spannutbrust und Stegrücken konzentriert. Deutlich zu erkennen ist hier die Querschneidenausspitzung 15 sowie die Hauptfreifläche 16.

Bei der in Fig. 9 gezeigten Abwandlung ist der Einschliff 12 deutlich als eine die Schneidenecke 6 erfassende Planfläche erkennbar, in der die Aufnahmetasche 8 für den Schneideinsatz 7 angeordnet ist. Am Übergang zur Spannut 4 bildet der Einschliff 12 eine Spanleitstufe 19.

Selbstverständlich sind weitere Abwandlungen möglich.

Beispielsweise kann das erfindungsgemäße Bohrwerkzeug alternativ zu den oben erläterten Bohrwerkzeugen einstückig aus einem geeigneten Werkstoff, z. B. Vollhartmetall, ausgebildet sein. In diesem Fall können die Spannuten in der Weise eingeschliffen sein, dass die Einschliffe die Schneidenecken und damit die Haupt- und Nebenschneidkanten maßgeblich definieren.

Die Spannuten können alternativ zu den oben beschriebenen wendelförmig genuteten Bohrwerkzeuge auch geradlinig verlaufen.

Des Weiteren sei darauf hingewiesen, dass sich erfindungsgemäß die Merkmale der oben beschriebenen Bohrwerkzeuge in den Grenzen des technisch Realisierbaren sowie im Umfang der Ansprüche beliebig miteinander kombinieren lassen.

## Patentansprüche

1. Bohrwerkzeug (1) mit einem Spannschaft (2) und einem sich an den Spannschaft (2) anschließenden Schneidteil (3), der zwei Spannuten (4) mit jeweils einer im Querschnitt konkaven Spannutfläche aufweist, wobei jede Spannut (4) in der an die Hauptschneidkante (9) angrenzenden Spanbildungszone im Bereich der Spannutbrust und/oder des Stegrückens zur Vergrößerung des Spannutquerschnitts einen Einschliff (12) aufweist,
der Einschliff (12) den Querschnitt der Spannut (4) im Bereich der Spanbildungszone vergrößert und im Querschnitt stärker gekrümmt ist als der Querschnitt der Spannut (4) außerhalb des Einschliffs (12), und
die axiale Länge, über die sich der Einschliff (12) erstreckt, im Bereich des 0,5 bis 1,5-fachen des Werkzeugdurchmessers
liegt, **dadurch gekennzeichnet dass** das Bohrwerkzeug einen zweischneidigen Spitzenanschliff mit punktsymmetrischer Schneidenanordnung und ausgespitzter Querschneide und zuzätzlich eine Querschneidenauspitzung aufweist.

2. Bohrwerkzeug (1) nach Anspruch 1, **dadurch gekennzeichnet, dass** der Einschliff (12) radial innerhalb der Schneidenecke (6) liegt, die von den der Spannut (4) zugeordneten Haupt- und Nebenschneidkanten (9, 10) gebildet wird.

3. Bohrwerkzeug (1) nach Anspruch 1, **dadurch gekennzeichnet, dass** der Einschliff (12) die Schneidenecke (6) erfasst, die von den der Spannut (4) zugeordneten Hauptund Nebenschneidkanten (9, 10) gebildet wird.

4. Bohrwerkzeug (1) nach einem der vorhergehenden Ansprüche, **dadurch gekennzeichnet, dass** der Einschliff (12) radial innerhalb der der Spannut (4) zugeordneten Nebenschneidkante (10) allmählich ausläuft.

5. Bohrwerkzeug (1) nach einem der vorhergehenden Ansprüche, **gekennzeichnet durch** einen plättchenförmigen Schneideinsatz (7), der in einer in die Spannut (4) eingearbeiteten Aufnahmetasche (8) sitzt.

6. Bohrwerkzeug (1) nach Anspruch 5, **dadurch gekennzeichnet, dass** die Aufnahmetasche (8) so ausgebildet ist, dass der plättchenförmige Schneideinsatz (7) die Schneidenecke (6) bildet.

7. Bohrwerkzeug (1) nach Anspruch 5 und 6, **dadurch gekennzeichnet, dass** der Einschliff (12) eine Planfläche (12a) definiert und die Aufnahmetasche (8) in Abhängigkeit von der Geometrie des plättchenförmigen Schneideinsatzes (7) so ausgebildet ist, dass sie eine mit der Planfläche (12a) im Wesentlichen bündige oder um einen vorgegebenen Überstand über die Planfläche (12a) hinausragende Anordnung des Schneideinsatzes (7) gestattet.

8. Bohrwerkzeug (1) nach einem der vorhergehenden Ansprüche, **dadurch gekennzeichnet, dass** der Einschliff (12) eine Planfläche (12a) ausbildet, die unter einem definierten Winkel zur Werkzeugachse (13) angeordnet ist.

9. Bohrwerkzeug (1) nach Anspruch 8, **dadurch gekennzeichnet, dass** die Planfläche (12a) die Hauptschneidkante (9) zumindest teilweise ausbildet.

10. Bohrwerkzeug (1) nach Anspruch 8 oder 9, **dadurch gekennzeichnet, dass** der Winkel der Planfläche (12a) zur Werkzeugachse (13) kleiner-gleich dem Spanwinkel oder dem Drallwinkel der Spannut (4) ist.

11. Bohrwerkzeug (1) nach einem der vorhergehenden Ansprüche, **dadurch gekennzeichnet, dass** die zwischen der Querschneidenausspitzung (15) und der angrenzenden Hauptfreifläche (18) gebildete Kante (17) zur Stabilisierung abgezogen ist.

## Claims

1. Drilling tool (1) having a clamping shaft (2) and a cutting portion (3) which adjoins the clamping shaft (2) and which has two chip flutes (4) which each have a chip flute face which is concave in cross-section,
wherein each chip flute (4) has in the chip formation zone adjacent to the main cutting edge (9) in the region of the chip flute front and/or the web rear a countersink (12) in order to increase the chip flute cross-section,
the countersink (12) increases the cross-section of the chip flute (4) in the region of the chip formation zone and is more highly curved in cross-section than the cross-section of the chip groove (4) outside the countersink (12), and
the axial length over which the countersink (12) extends is in the region of from 0.5 to 1.5 times the tool diameter, **characterised in that** the drilling tool has a double-edged ground tip portion with a point-symmetrical blade arrangement and point-thinned transverse blade and in addition a transverse blade point thinning.

2. Drilling tool (1) according to claim 1, **characterised in that** the countersink (12) is located radially inside the blade corner (6) which is formed by the main und auxiliary cutting edges (9, 10) which are associated with the chip flute (4).

3. Drilling tool (1) according to claim 1, **characterised in that** the countersink (12) includes the blade corner (6) which is formed by the main und auxiliary cutting edges (9, 10) which are associated with the chip flute (4).

4. Drilling tool (1) according to any one of the preceding claims, **characterised in that** the countersink (12) gradually terminates radially inside the auxiliary cutting edge (10) which is associated with the chip flute (4).

5. Drilling tool (1) according to any one of the preceding claims, **characterised by** a plate-like cutting insert (7) which is located in a receiving pocket (8) which is incorporated in the chip flute (4).

6. Drilling tool (1) according to claim 5, **characterised in that** the receiving pocket (8) is constructed in such a manner that the plate-like cutting insert (7) forms the blade corner (6).

7. Drilling tool (1) according to claim 5 and 6, **characterised in that** the countersink (12) defines a planar face (12a) and the receiving pocket (8) is constructed in accordance with the geometry of the plate-like cutting insert (7) in such a manner that it allows an arrangement of the cutting insert (7), which arrangement is substantially flush with the planar face (12a) or protrudes beyond the planar face (12a) by a predetermined projection.

8. Drilling tool (1) according to any one of the preceding claims, **characterised in that** the countersink (12) forms a planar face (12a) which is arranged at a defined angle with respect to the tool axis (13).

9. Drilling tool (1) according to claim 8, **characterised in that** the planar face (12a) at least partially forms the main cutting edge (9).

10. Drilling tool (1) according to claim 8 or 9, **characterised in that** the angle of the planar face (12a) with respect to the tool axis (13) is smaller than or equal to the chip angle or the angle of twist of the chip flute (4).

11. Drilling tool (1) according to any one of the preceding claims, **characterised in that** the edge (17) which is formed between the transverse blade point thinning (15) and the adjacent main free face (18) is removed for stabilisation.

## Revendications

1. Outil de forage (1) avec une tige de serrage (2) et une partie coupante (3) se raccordant à la tige de serrage (2), laquelle présente deux goujures (4) avec respectivement une surface de goujure concave dans la section transversale,
dans lequel
chaque goujure (4) présente, dans la zone de formation de copeaux adjacente à l'arête coupante principale (9), à proximité de la face avant de goujure et/ou du côté arrière de l'entretoise, afin d'agrandir la section transversale de goujure, une indentation (12),
l'indentation (12) agrandit la section transversale de la goujure (4) à proximité de la zone de formation de copeaux et est plus fortement incurvée dans la section transversale que la section transversale de la goujure (4) à l'extérieur de l'indentation (12), et
la longueur axiale, sur laquelle l'indentation (12) s'étend, se situe dans la plage allant de 0,5 à 1,5 fois le diamètre d'outil, **caractérisé en ce que** l'outil de forage présente un affûtage de pointe à deux lames avec une disposition de lames à symétrie de point et une lame transversale amincie et en supplément un amincissement de lame transversale.

2. Outil de forage (1) selon la revendication 1, **caractérisé en ce que** l'indentation (12) se situe de manière radiale à l'intérieur du coin de lame (6), qui est formé par des arêtes coupantes principales et secondaires (9, 10) associées à la goujure (4).

3. Outil de forage (1) selon la revendication 1, **caractérisé en ce que** l'indentation (12) détecte le coin de lame (6), qui est formé par les arêtes coupantes principales et secondaires (9, 10) associées à la goujure (4).

4. Outil de forage (1) selon l'une quelconque des revendications précédentes, **caractérisé en ce que** l'indentation (12) se termine peu à peu de manière radiale à l'intérieur de l'arête coupante secondaire (10) associée à la goujure (4).

5. Outil de forage (1) selon l'une quelconque des revendications précédentes, **caractérisé par** un insert coupant (7) en forme de plaquette, qui repose dans un compartiment de réception (8) pratiqué dans la goujure (4).

6. Outil de forage (1) selon la revendication 5, **caractérisé en ce que** le compartiment de réception (8) est réalisé de telle sorte que l'insert coupant (7) en forme de plaquette forme le coin de lame (6).

7. Outil de forage (1) selon la revendication 5 et 6, **caractérisé en ce que** l'indentation (12) définit une surface plane (12a), et **en ce que** le compartiment de réception (8) est réalisé en fonction de la géométrie de l'insert coupant (7) en forme de plaquette de telle sorte qu'il autorise une disposition de l'insert coupant (7) sensiblement au même niveau que la surface plane (12a) ou dépassant de la surface plane (12a) selon une saillie spécifiée.

8. Outil de forage (1) selon l'une quelconque des revendications précédentes, **caractérisé en ce que** l'indentation (12) réalise une surface plane (12a), qui est disposée selon un angle défini par rapport à l'axe d'outil (13).

9. Outil de forage (1) selon la revendication 8, **caractérisé en ce que** la surface plane (12a) réalise au moins en partie l'arête coupante principale (9).

10. Outil de forage (1) selon la revendication 8 ou 9, **caractérisé en ce que** l'angle de la surface plane (12a) par rapport à l'axe d'outil (13) est aussi petit que l'angle d'inclinaison de coupe ou l'angle de turbulence de la goujure (4).

11. Outil de forage (1) selon l'une quelconque des revendications précédentes, **caractérisé en ce que** l'arête (17) formée entre l'amincissement de lame transversale (15) et la surface libre principale (18) adjacente est retirée aux fins de la stabilisation.
